# EUROPÄISCHE PATENTSCHRIFT

(11) **EP 1 526 984 B1**
(45) Veröffentlichungstag und Bekanntmachung des Hinweises auf die Patenterteilung: **12.09.2007**
(21) Anmeldenummer: 03714633.9
(22) Anmeldetag: 03.02.2003
(51) Int. Cl.: B60Q 9/00, B60K 26/02

(54) **VERFAHREN UND VORRICHTUNG ZUR SIGNALISIERUNG MEHRERER FÜR DEN BETRIEB EINES KRAFTFAHRZEUGS RELEVANTER INFORMATIONEN**
METHOD AND DEVICE FOR SIGNALING SEVERAL PIECES OF INFORMATION THAT ARE RELEVANT FOR OPERATING A MOTOR VEHICLE
PROCEDE ET DISPOSITIF POUR SIGNALISER PLUSIEURS INFORMATIONS D'INTERET POUR LA MARCHE D'UN VEHICULE

(30) Priorität: 24.07.2002 DE 10233570
(43) Veröffentlichungstag der Anmeldung: 04.05.2005
(73) Patentinhaber: ROBERT BOSCH GMBH, 70442 Stuttgart (DE)
(72) Erfinder: GRILL, Michael, 70563 Stuttgart (DE); KUSTOSCH, Mario, 71706 Markgroeningen (DE)
(86) Internationale Anmeldenummer: PCT/DE2003/000291
(87) Internationale Veröffentlichungsnummer: WO 2004/016464

(56) Entgegenhaltungen:
- EP-A- 0 633 155
- DE-A- 10 026 048
- DE-A- 19 620 929
- US-A- 3 982 510
- US-A- 4 510 906
- US-A- 5 627 752

## Beschreibung

### Stand der Technik

Die Erfindung geht von einem Verfahren und von einer Vorrichtung zur Signalisierung mehrerer für den Betrieb eines Kraftfahrzeugs relevanter Informationen nach der Gattung der unabhängigen Ansprüche aus.

Es sind bereits Verfahren und Vorrichtungen zur Signalisierung mehrerer für den Betrieb eines Kraftfahrzeugs relevanten Informationen bekannt. Beispielsweise ist in vielen Fahrzeugen bereits eine optische Anzeige für den aktuellen Kraftstoffverbrauch standardmäßig vorgesehen und fördert das Bewusstsein für eine ökonomische Fahrweise. Dabei können verschiedene Kraftstoffverbrauchswerte optisch wiedergegeben werden.

Aus der US 3,982,510 ist eine pneumatische Realisierung einer verstärkten Pedalrückstellkraft für zwei verschiedene Betriebspunkte einer Brennkraftmaschine offenbart.

### Vorteile der Erfindung

Das erfindungsgemäße Verfahren und die erfindungsgemäße Vorrichtung zur Signalisierung mit den Merkmalen der unabhängigen Ansprüche haben demgegenüber den Vorteil, dass verschiedene Informationen durch eindeutige, insbesondere ein Maximum aufweisende haptische Signalisierungen bei verschiedenen Stellungen eines Bedienelementes des Fahrzeugs, insbesondere einem Fahrpedal, wiedergegeben werden. Durch die haptische Signalisierung wird der Vorteil bewirkt, dass der Fahrer des Fahrzeugs die entsprechende Information wahrnimmt, ohne den Blick von der Fahrbahn nehmen zu müssen. Auf diese Weise wird das Unfallrisiko reduziert. Erfolgt die haptische Signalisierung über ein ständig vom Fahrer betätigtes Bedienelement, beispielsweise dem Fahrpedal, so ist sichergestellt, dass der Fahrer die durch die haptischen Signalisierungen übermittelten Informationen wahrnimmt. Die haptische Signalisierung lenkt nicht vom Verkehrsgeschehen ab und stellt auch kein Sicherheitsrisiko dar.

Gemäß der Erfindung werden verschiedene Informationen durch verschiedene Kraftstoffverbrauchswerte gebildet werden. Somit lassen sich bei verschiedenen Stellungen des Bedienelementes verschiedene Kraftstoffverbrauchswerte haptisch signalisieren und damit für den Fahrer zweifelsfrei unterscheiden. Somit lässt sich dem Fahrer des Fahrzeugs über die haptische Signalisierung eine quantitative Aussage über den aktuellen Kraftstoffverbrauch vermitteln.

Gemäß der Erfindung werden auch die verschiedenen Kraftstoffverbrauchswerte jeweils durch einen ein Maximum bei der zugeordneten Stellung des Bedienelementes aufweisenden Verlauf der haptischen Signalisierung am Bedienelement, insbesondere einen sägezahnförmigen Verlauf, wiedergegeben werden. Auf diese Weise lassen sich die verschiedenen Kraftstoffverbrauchswerte besonders einfach und mit wenig Aufwand haptisch bei der zugeordneten Stellung des Bedienelementes signalisieren. Weiterhin wird sichergestellt, dass ein bestimmter Kraftstoffverbrauchswert bei nur einer einzigen Stellung des Bedienelementes zu einem Maximum bei der haptischen Signalisierung führt, so dass weitere Stellungen des Bedienelementes für die Wiedergabe weiterer Kraftstoffverbrauchswerte mittels der haptischen Signalisierung zur Verfügung stehen. Auf diese Weise wird besonders einfach eine quantitativ differenzierbare haptische Signalisierung verschiedener Kraftstoffverbrauchswerte ermöglicht.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es auch, wenn mindestens ein zu signalisierender Kraftstoffverbrauchswert mittels einer Eingabeeinheit vorgegeben wird. Auf diese Weise kann der Fahrer des Fahrzeugs selbst bestimmen, welche Kraftstoffverbrauchswerte ihm haptisch signalisiert werden sollen. Die haptische Signalisierung der Kraftstoffverbrauchswerte wird somit an die Bedürfnisse des Fahrers angepasst.

Ein weiterer Vorteil besteht darin, dass durch eine der haptischen Signalisierungen ein optimaler Motorwirkungsgrad wiedergegeben wird. Auf diese Weise lassen sich auch verschiedenartige Informationen durch die haptische Signalisierung am Bedienelement wiedergeben.

Besonders vorteilhaft ist dabei, dass der optimale Motorwirkungsgrad durch eine ab einer dem optimalen Motorwirkungsgrad zugeordneten Stellung des Bedienelementes wirkenden haptischen Signalisierung wiedergegeben wird. Auf diese Weise lässt sich die haptische Signalisierung des optimalen Motorwirkungsgrades von einer gegebenenfalls vorhandenen haptischen Signalisierung eines oder mehrerer Kraftstoffverbrauchswerte in der Art der haptischen Signalisierung unterscheiden und somit vom Fahrer differenziert wahrnehmen.

Ein weiterer Vorteil besteht darin, dass die haptische Signalisierung durch eine am Bedienelement wirkende Rückstellkraft gebildet wird. Auf diese Weise lässt sich die haptische Signalisierung besonders einfach und für den Fahrer wirkungsvoll realisieren, da er eine solche Stellkraft bei im Wesentlichen ständiger Betätigung des Bedienelementes mit großer Wahrscheinlichkeit wahrnehmen wird.

### Zeichnung

Ein Ausführungsbeispiel der Erfindung ist in der Zeichnung dargestellt und in der nachfolgenden Beschreibung näher erläutert.

Es zeigen
- Figur 1: ein Blockschaltbild mit einer erfindungsgemäßen Vorrichtung,
- Figur 2: ein Kennfeld zur Ermittlung eines spezifischen Kraftstoffverbrauchs des Kraftfahrzeugs,
- Figur 3: ein Kennfeld zur Ermittlung einer Rückstellkraft für ein Fahrpedal des Fahrzeugs,
- Figur 4: ein Funktionsdiagramm zur Verdeutlichung der Funktionsweise einer Vorrichtung und eines Verfahrens zur Signalisierung des optimalen Motorwirkungsgrades.
- Figur 5: ein weiteres Funktionsdiagramm zur Veranschaulichung des Aufbaus der erfindungsgemäßen Vorrichtung und des Ablaufs des erfindungsgemäßen Verfahrens,
- Figur 6: ein Kennfeld zur Ermittlung eines spezifischen Kraftstoffverbrauchs,
- Figur 7: einen Verlauf einer Rückstellkraft eines Fahrpedals in Abhängigkeit des Kraftstoffverbrauchs und
- Figur 8: einen Verlauf der Rückstellkraft des Fahrpedals in Abhängigkeit einer Fahrpedalstellung zur Signalisierung verschiedenartiger für den Betrieb des Kraftfahrzeugs relevanter Informationen.

### Beschreibung der Ausführungsbeispiele

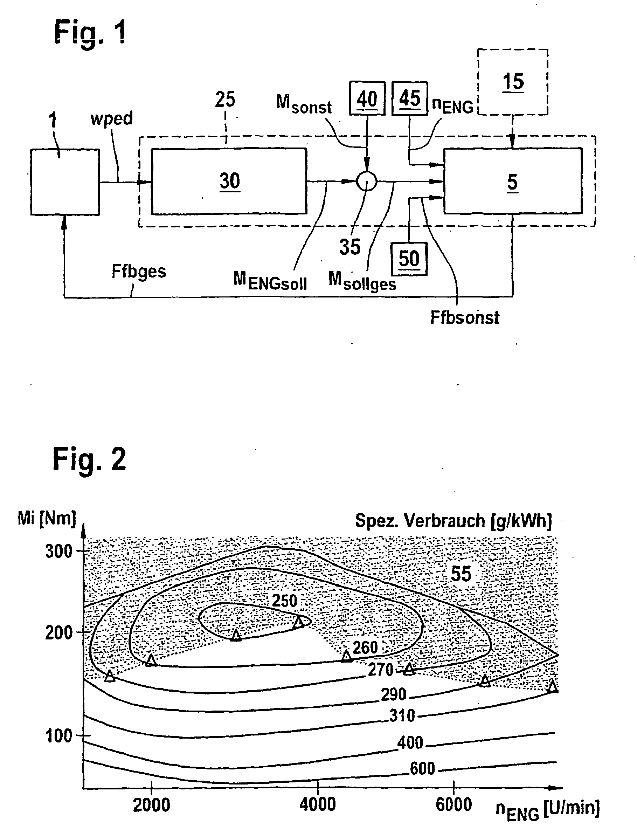

In Figur 1 kennzeichnet 25 eine Steuerung eines Kraftfahrzeugs mit einer Antriebseinheit, die beispielsweise einen Otto-Motor, einen Dieselmotor, einen Elektromotor oder dergleichen umfasst, oder auf einem beliebigen, dazu alternativen Antriebskonzept basiert. Das Fahrzeug umfasst weiterhin ein Bedienelement 1, das beispielsweise als Fahrpedal ausgebildet ist. Die Steuerung 25 umfasst eine Fahrerwunschinterpretationseinheit 30, die mit dem Fahrpedal 1 verbunden ist. Aus der Stellung wped des vom Fahrer betätigten Fahrpedals 1 ermittelt die Fahrerwunschinterpretationseinheit 30 einen Sollwert für eine Ausgangsgröße der Antriebseinheit. Bei dieser Ausgangsgröße kann es sich beispielsweise um ein Motorausgangsmoment oder um ein Radausgangsmoment oder eine Ausgangsleistung oder eine von den genannten Größen ableitbare Ausgangsgröße handeln. Im Folgenden soll beispielhaft angenommen werden, dass es sich bei der Ausgangsgröße der Antriebseinheit um ein Motorausgangsmoment handelt. Die Fahrerwunschinterpretationseinheit 30 bildet somit aus der Stellung wped des Fahrpedals 1 in dem Fachmann bekannter Weise einen Sollwert M_{ENGsoll} für das Motorausgangsmoment der Antriebseinheit. Der so abhängig vom Fahrerwunsch gebildete Sollwert M_{ENGsoll} wird einem ersten Additionsglied 35 zugeführt und dort mit einer resultierenden Momentenanforderung Mₛₒₙₛₜ addiert, die von einem Koordinator 40 in Abhängigkeit der übrigen Drehmomentanforderungen gebildet wird. Die übrigen Drehmomentenanforderungen können beispielsweise zur Kompensation des Momentenbedarfs von Nebenaggregaten des Fahrzeugs, wie beispielsweise einer Klimaanlage, eines Autoradios oder eines Servomotors, herrühren oder von einer Leerlaufregelung. Die Koordination dieser übrigen Drehmomentanforderungen im Koordinator 40 erfolgt dabei ebenfalls in dem Fachmann bekannter Weise. Die vom ersten Additionsglied 35 gebildete Summe ist ein resultierender Gesamtsollwert M_{sollges} der einer erfindungsgemäßen Vorrichtung 5 zugeführt wird. Die Vorrichtung 5 dient zur haptische Signalisierung am Bedienelement 1, also in diesem Beispiel am Fahrpedal 1. Diese haptische Signalisierung kann beispielsweise durch Erzeugung einer geeigneten Rückstellkraft am Fahrpedal 1 erfolgen. In der Vorrichtung 5 ist von einem Drehzahlsensor 45 eine aktuelle Drehzahl n_{ENG} eines die Antriebseinheit antreibenden Motors zugeführt, der wie beschrieben beispielsweise ein Otto-Motor, ein Dieselmotor oder ein Elektromotor sein kann. Weiterhin kann optional ein Koordinator 50 für sonstige Rückstellkraftanforderungen an das Fahrpedal 1 vorgesehen sein, der für diese sonstigen Rückstellkraftanforderungen eine resultierende Rückstellkraftanforderung Ffbsonst bildet. Dies könnte z.B. eine haptische Rückmeldung zur Einhaltung eines Sicherheitsabstandes sein. Die resultierende Rückstellkraftanforderung Ffbsonst wird ebenfalls der Vorrichtung 5 zugeführt. Optional kann außerdem eine Eingabeeinheit 15, wie in Figur 1 gestrichelt dargestellt, vorgesehen sein. An der Eingabeeinheit 15 kann der Fahrer beispielsweise einen oder mehrere Kraftstoffverbrauchswerte vorgeben. Diese werden ebenfalls der Vorrichtung 5 zugeführt. Gemäß Figur 1 umfasst die Steuerung 25 die Fahrerwunschinterpretationseinheit 30, das erste Additionsglied 35 und die Vorrichtung 5. Die Steuerung 25 kann beispielsweise hardware- und/oder softwaremäßig implementiert sein, wobei die Software von einem Mikrochip abgearbeitet werden kann.

Die Vorrichtung 5 ermittelt aus den zugeführten Eingangsgrößen eine resultierende Gesamtrückstellungskraft Ffbges und steuert das Fahrpedal 1 zur Einstellung dieser resultierenden Gesamtrückstellungskraft Ffbges an. Dies kann in dem Fachmann bekannter Weise mittels eines in Figur 1 nicht dargestellten von der Vorrichtung 5 elektronisch angesteuerten Aktuators zur Einstellung einer gegen die Betätigungsrichtung des Fahrpedals 1 wirkenden Federkraft realisiert werden.

Für die folgenden Betrachtungen soll beispielhaft angenommen werden, dass das Fahrzeug von einem Verbrennungsmotor, also beispielsweise einem Otto-Motor oder einem Dieselmotor, angetrieben wird. Die Betrachtungen gelten jedoch allgemein für den Energieverbrauch des Fahrzeugs. Während eines Beschleunigungsvorgangs entspricht der Kraftstoffverbrauch der Leistung, die zur Überwindung der Massenträgheit des Fahrzeugs benötigt wird. Der Kraftstoffverbrauch während des Beschleunigungsvorgangs kann minimiert werden, indem der Motor durch eine definierte Fahrpedalstellung vom Fahrer im günstigsten Betriebspunkt gehalten wird, diese Fahrpedalstellung soll dem Fahrer erfindungsgemäß durch ein haptisches Signal am Fahrpedal 1 angezeigt werden.

Figur 2 zeigt ein sogenanntes Muschelkennfeld eines Verbrennungsmotors, bei dem das Ausgangsmoment des Motors, das sogenannte indizierte Moment Mi in Nm über der Motordrehzahl n_{ENG} in U/min aufgetragen ist. Das indizierte Moment Mi und die Motordrehzahl n_{ENG} spannen dabei ein Kennfeld für einen spezifischen Kraftstoffverbrauch des Fahrzeugs in g/kWh auf, indem Isolinien für diesen spezifischen Kraftstoffverbrauch in der genannten Einheit dargestellt sind. Das Kennfeld kann auf einem Motorenprüfstand ermittelt werden, indem unter Vorgabe der Motordrehzahl n_{ENG} und der Last, die beispielsweise durch eine mit der Kurbelwelle des Motors verbundene Wirbelstrombremse realisiert wird, das Verhältnis aus verbrauchter Kraftstoffmenge und verrichteter mechanischer Arbeit an der Kurbelwelle ermittelt wird. Dieses Verhältnis wird mit Be bezeichnet. Das Verhältnis Be ist der spezifische Kraftstoffverbrauch. Der spezifische Kraftstoffverbrauch Be wird dann gemäß Figur 2 über der Motordrehzahl und dem indizierten Moment Mi aufgetragen, das die durch die Wirbelstrombremse variierte Last in dem Fachmann bekannter Weise repräsentiert. Dabei kann das indizierte Moment Mi als Mittelwert für die jeweilige Bremswirkung der Wirbelstrombremse über eine vorgegebene Zeit ermittelt werden. Verbindet man alle Punkte im Kennfeld, die einen etwa gleichen spezifischen Kraftstoffverbrauch Be aufweisen, so erhält man, wie in Figur 2 dargestellt, muschelförmige Isolinien oder Höhenlinien, die diesem Kennfeld seinen Namen geben.

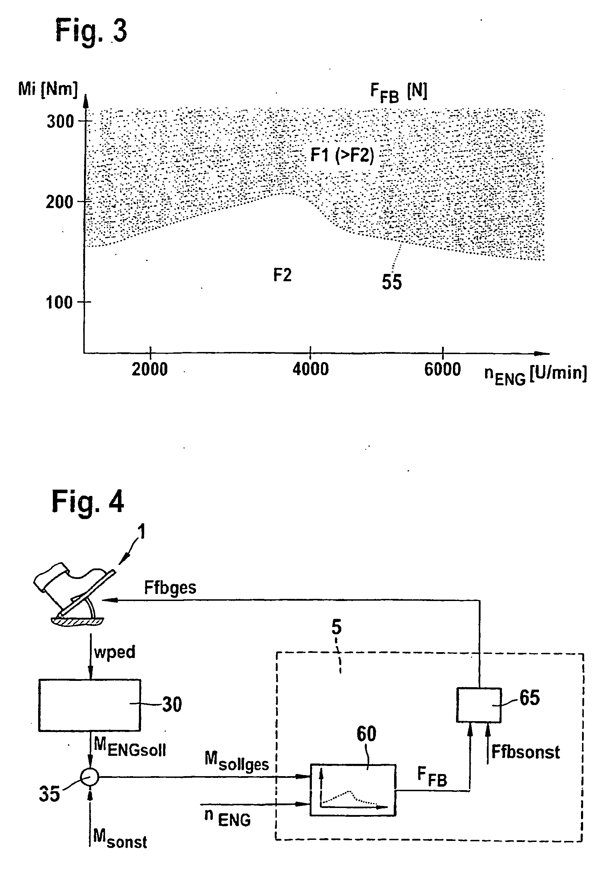

Für jede Motordrehzahl n_{ENG} gibt es genau einen minimalen spezifischen Kraftstoffverbrauch Be und damit genau einen optimalen Wirkungsgrad. In Figur 2 sind die Punkte mit dem minimalen spezifischen Kraftstoffverbrauch für verschiedene Motordrehzahlen n_{ENG} durch Dreiecke gekennzeichnet. Werden die Punkte mit dem minimalen spezifischen Kraftstoffverbrauch miteinander verbunden, so erhält man die in Figur 2 punktiert gezeichnete Linie, die mit dem Bezugszeichen 55 gekennzeichnet ist. Diese Linie 55 wird im Folgenden auch als Linie des minimalen spezifischen Kraftstoffverbrauchs bezeichnet. Figur 3 zeigt ein Kennfeld, in dem der Verlauf eines haptischen Signals F_{FB} in N und damit eine Rückstellkraft für das Fahrpedal 1 über der Motordrehzahl n_{ENG} in U/min auf der Abszisse und dem indizierten Motormoment Mi in Nm auf der Ordinate aufgetragen ist. Der Verlauf dieses haptischen Signals F_{FB} ergibt sich dabei aus der punktierten Linie 55 des minimalen spezifischen Kraftstoffverbrauchs gemäß Figur 2, in dem der Bereich oberhalb und unterhalb dieser Linie 55 durch unterschiedliche Werte der Rückstellkraft F_{FB} voneinander getrennt wird. Insbesondere können dies zwei verschiedene Werte sein, nämlich eine erste Rückstellkraft F1 oberhalb der Linie 55 des minimalen spezifischen Kraftstoffverbrauchs und eine zweite Rückstellkraft F2 unterhalb dieser Linie 55, wobei beispielsweise die erste Rückstellkraft F1 größer als die zweite Rückstellkraft F2 und die zweite Rückstellkraft F2 gleich Null sein kann. Damit kann dem Fahrer durch eine Erhöhung der Rückstellkraft F_{FB} am Fahrpedal 1 der optimale Betriebspunkt der Antriebseinheit und damit der optimale Motorwirkungsgrad signalisiert werden. Für den Fall, dass wie beschrieben, die erste Rückstellkraft F1 größer als die zweite Rückstellkraft F2 und die zweite Rückstellkraft F2 gleich Null ist, ergibt sich der optimale Wirkungsgrad des Motors für die Fahrpedalstellung, an der der Fahrer eine entsprechende Erhöhung des Widerstandes und damit der Rückstellkraft bei der Betätigung des Fahrpedals 1 spürt.

In Figur 4 ist ein Funktionsdiagramm zur Verdeutlichung der Funktionsweise einer Vorrichtung 5 sowie einer Verfahrens dargestellt, un dem Fahrer den optimalen Motorwirkungsgrad zu signalisieren. In Figur 4 kennzeichnen gleiche Bezugszeichen gleiche Elemente, wie in Figur 1. Dabei ist in Figur 4 im Unterschied zum Blockschaltbild nach Figur 1 zusätzlich der Aufbau der Vorrichtung 5 näher erläutert. Die Vorrichtung 5, die beispielsweise als Softwarestruktur auf einem Mikrochip implementiert sein kann, umfasst dabei eine Kennfeldfunktion 60, die das Muschelkennfeld aus Figur 2 umsetzt, und der als Eingangsgrößen das vom ersten Additionsglied 35 abgegebene resultierende Gesamtsollmoment Msollges sowie die aktuelle Motordrehzahl n_{ENG} als Eingangsgrößen zugeführt sind. Daraus ermittelt die Kennfeldfunktion 60 als Ausgangsgröße das haptische Signal F_{FB}, indem geprüft wird, ob der durch die aktuelle Motordrehzahl n_{ENG} und das resultierende Gesamtsollmoment Msollges gebildete Betriebspunkt oberhalb oder unterhalb der Linie 55 des minimalen spezifischen Kraftstoffverbrauchs liegt. Liegt der Betriebspunkt oberhalb der Linie 55, so ist F_{FB} gleich F1, andernfalls ist F_{FB} gleich F2. Das haptische Signal F_{FB} wird einem Maximalauswahlglied 65 zugeführt, dem außerdem vom Rückstellkraftkoordinator 50 die resultierende Rückstellkraftanforderung F_{fbsonst} der übrigen Rückstellkraftanforderungen zugeführt ist. Das Maximalauswahlglied 65 wählt aus den zugeführten Größen das Maximum aus und gibt es als resultierendes haptisches Signal Ffbges an das Fahrpedal 1 zur Einstellung der entsprechenden Rückstellkraft ab. Durch das Maximalauswahlglied 65 wird die Rückstellkraft am Fahrpedal 1 nach unten begrenzt, um sicher zu stellen, dass das Fahrpedal nach Loslassen wieder in seine Ausgangsstellung zurückkehrt.

Durch dieses Verfahren und diese Vorrichtung 5 hat der Fahrer die Möglichkeit, aufgrund der haptischen Signalisierung am Fahrpedal 1 mit optimalem Wirkungsgrad des Motors zu fahren und zu beschleunigen. Darüber hinaus ist ein haptisches Signal am Fahrpedal 1 gegenüber einer optischen Anzeige dem Bewusstsein des Fahrers ständig präsent und wirkt nicht irritierend und vom Verkehr ablenkend.

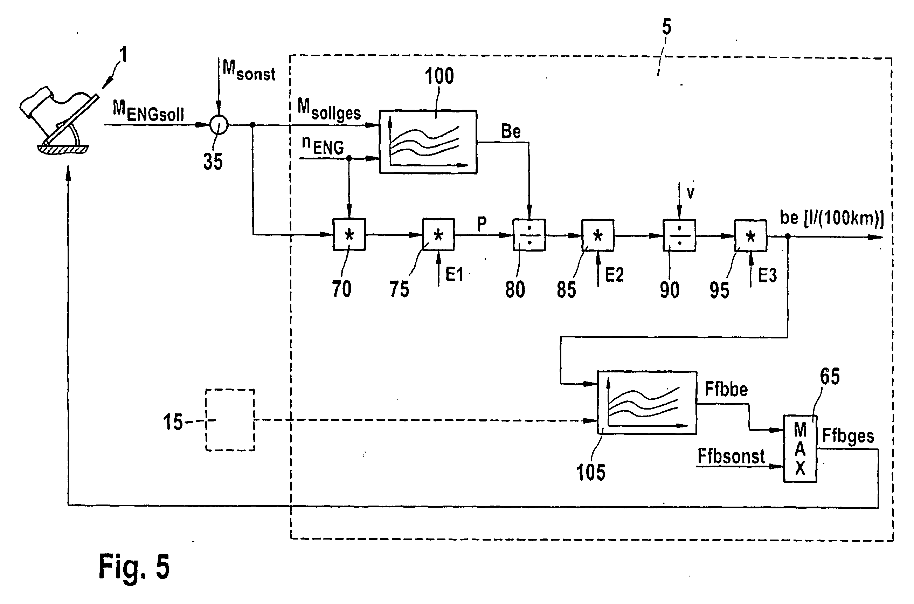

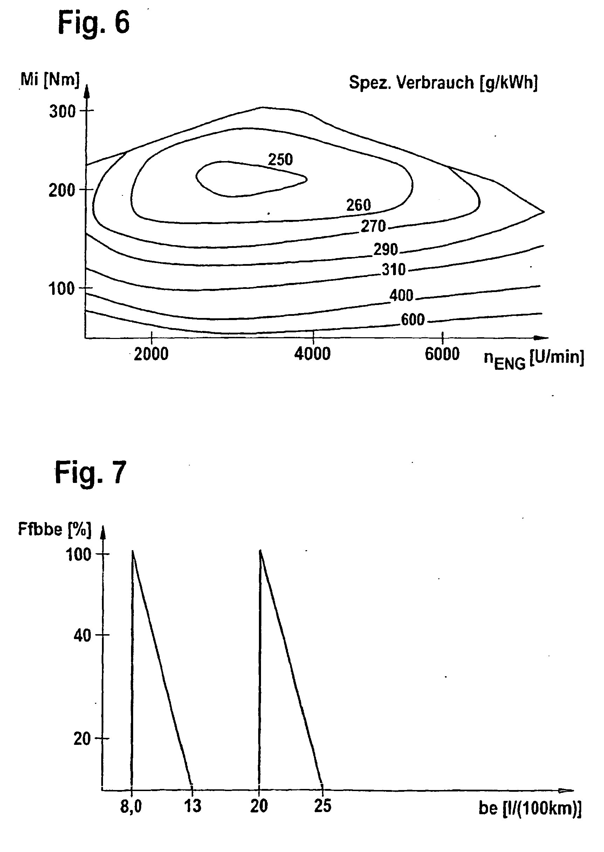

In Figur 5 ist ein erfindungsgemäßes Ausführungsbeispiel für die Vorrichtung 5 ausgehend von dem Blockschaltbild nach Figur 1 dargestellt, wobei wiederum gleiche Bezugszeichen gleiche Elemente kennzeichnen, wie in den vorherigen Figuren. Bei dieser Ausführungsform ist das vom ersten Additionsglied 35 abgegebene resultierende Gesamtsollmoment Msollges und die aktuelle Motordrehzahl n_{ENG} einer zweiten Kennfeldfunktion 100 der Vorrichtung 5 zugeführt, die ausgehend von dem Muschelkennfeld gemäß Figur 2, das in Figur 6 nochmals ohne die Linie 55 des minimalen spezifischen Kraftstoffverbrauchs dargestellt ist, für den durch das resultierende Gesamtsollmoment M_{sollges} und die aktuelle Motordrehzahl n_{ENG} definierten Betriebspunkt der Antriebseinheit den zugehörigen spezifischen Kraftstoffverbrauch Be aus dem Muschelkennfeld ermittelt. Parallel zur Ermittlung des spezifischen Kraftstoffverbrauchs wird die mechanische Leistung an der Kurbelwelle des Verbrennungsmotors durch Multiplikation des resultierenden Gesamtsollmomentes M_{sollges} und der aktuellen Motordrehzahl n_{ENG} in einem ersten Multiplikationsglied 70 berechnet und in einem zweiten Multiplikationsglied 75 mittels eines ersten Umrechnungsfaktors E1 in dem Fachmann bekannter Weise auf die Einheit kW umgerechnet. Am Ausgang des zweiten Multiplikationsgliedes 75 liegt somit die mechanische Leistung P in kW vor. In einem ersten Divisionsglied 80 wird der von der zweiten Kennfeldfunktion 100 ermittelte spezifische Kraftstoffverbrauch Be durch die Leistung P in kW am Ausgang des zweiten Multiplikationsgliedes 75 dividiert, um den Kraftstoffverbrauch in g/h zu ermitteln. Das Ergebnis dieser Division wird einem dritten Multiplikationsglied 85 zugeführt und dort durch Multiplikation mit einem zweiten Umrechnungsfaktor E2 derart in dem Fachmann bekannter Weise umgerechnet, dass sich ein Kraftstoffverbrauch in l/h ergibt. Es erfolgt also mittels des dritten Multiplikationsgliedes 85 eine Umrechnung der Einheit g in l mittels der spezifischen Dichte des verwendeten Kraftstoffs, wobei der zweite Umrechnungsfaktor E2 dem Kehrwert dieser spezifischen Dichte entspricht und die Dichte auf l bezogen ist. Der Ausgang des dritten Multiplikationsgliedes 85 wird in einem zweiten Divisionsglied 90 durch die aktuelle Geschwindigkeit des Fahrzeugs dividiert, die beispielsweise von einer Geschwindigkeitsmessvorrichtung in dem Fachmann bekannter Weise erfasst und dem zweiten Divisionsglied 90 zugeführt wird. Am Ausgang des zweiten Divisionsgliedes 90 ergibt sich somit der Kraftstoffverbrauch in L/(h.(m/s)). Dieser wird in einem vierten Multiplikationsglied 95 mit einem dritten Umrechnungsfaktor E3 in dem Fachmann bekannter Weise multipliziert, um die Einheit m/s in die Einheit km/h umzurechnen, so dass sich am Ausgang des vierten Multiplikationsgliedes 95 ein Kraftstoffverbrauch be pro zurückgelegter Fahrtstrecke in l/(100km) ergibt. Dieser Kraftstoffverbrauch be pro zurückgelegter Fahrtstrecke kann an einer optischen Anzeigevorrichtung des Fahrzeugs zur Anzeige gebracht werden. Der Kraftstoffverbrauch be pro zurückgelegter Fahrtstrecke wird im Folgenden auch als Streckenverbrauch be bezeichnet. Der Streckenverbrauch be wird einer Kennlinienfunktion 105 zugeführt, die in Abhängigkeit des Streckenverbrauchs be ein zweites haptisches Signal Ffbbe ermittelt und dem Maximalauswahlglied 65 zusammen mit der resultierenden Rückstellkraftanforderung Ffbsonst der übrigen Rückstellkraftanforderungen zuführt. Das Maximalauswahlglied 65 führt eine Maximalauswahl der beiden zugeführten Größen durch, so dass der größere der beiden Eingangswerte als resultierendes haptisches Signal bzw. als resultierende Gesamtrückstellkraftanforderung Ffbges am Bedienelement 1 in der beschriebenen Weise umgesetzt wird. In Figur 7 ist ein Beispiel für die Kennlinienfunktion 105 dargestellt. Dabei ist das zweite haptische Signal Ffbbe in Prozent der maximalen Rückstellkraft über dem Streckenverbrauch be in 1/(100km) aufgetragen. Dabei steigt dieses zweite haptische Signal Ffbbe bei dem Streckenverbrauch 81/(100km) steil bis auf 100% an und flacht anschließend bis zum Streckenverbrauch 131/(100km) vergleichsweise langsam ab. Bei einem Streckenverbrauch von 201/(100km) steigt das zweite haptische Signal wiederum steil bis 100% an und flacht anschließend wiederum vergleichsweise langsam bis zu einem Streckenverbrauch von 251/(100km) ab. Dabei ergibt sich gemäß dem Beispiel nach Figur 7 für das zweite haptische Signal sowohl für den Streckenverbrauch zwischen 8 und 131/(100km) als auch für den Streckenverbrauch zwischen 20 und 251/(100km) jeweils etwa der gleiche sägezahnförmige Verlauf mit einem Maximum bei 81/(100km) bzw. bei 201/(100km). Durch die Wahl des sägezahnförmigen Verlaufs gelingt es, aufgrund des steilen Anstiegs, den Fahrer den zugeordneten Streckenverbrauch deutlich spüren zu lassen. Das jeweils anschließende Abflachen bzw. Abrampen des zweiten haptischen Signals Ffbbe ermöglicht ein späteres erneutes Ansteigen und schafft damit Platz für die Signalisierung weiterer Informationen bzw. Streckenverbräuche über die Rückstellkraft am Fahrpedal 1. Dabei können die Streckenverbräuche be mit Maximum des zweiten haptischen Signals Ffbbe fest in der Vorrichtung 5 vorgegeben sein oder an der Eingabeeinheit 15 vom Fahrer vorgegeben und gemäß dem gestrichelten Pfeil in Figur 5 der Kennlinienfunktion 105 zugeführt sein, so dass der Fahrer selbst wählen kann, bei welchem Streckenverbrauch bzw. bei welchen Streckenverbräuchen das Fahrpedal 1 die maximale Rückstellkraft von 100% gemäß dem zweiten haptischen Signal Ffbbe erzeugen soll.

Dabei kann der Fahrer über die Eingabeeinheit 15 einen oder mehrere Streckenverbräuche vorgeben, bei denen am Fahrpedal 1 die maximale Rückstellkraft auftreten soll. Weitere Streckenverbräuche mit maximaler Rückstellkraft am Fahrpedal 1 können optional fest vom Hersteller vorgegeben und in einem der Vorrichtung 5 zugeordneten Speicher abgelegt und der Kennlinienfunktion 105 zugeführt sein.

Erfindungsgemäß kann es nun weiterhin vorgesehen sein, dass die Vorrichtung 5 sowohl die Funktionalität gemäß Figur 4 als auch die Funktionalität gemäß Figur 5 umfasst, wobei dem Maximalauswahlglied 65 dann sowohl das erste haptische Signal F_{FB} als auch das zweite haptische Signal Ffbbe als auch die resultierende Rückstellkraftanforderung Ffbesonst zugeführt ist und das vom Maximalauswahlglied 65 abgegebene resultierende haptische Signal Ffbges das Maximum aus den drei genannten Eingangsgrößen darstellt. Auf diese Weise lassen sich mittels des haptischen Signals, d.h. in diesem Beispiel der Rückstellkraft am Fahrpedal 1 verschiedenartige Informationen signalisieren, nämlich zum einen eine oder mehrere verschiedene Streckenverbräuche, beispielsweise gemäß Figur 7, und zum anderen ein optimaler Motorwirkungsgrad gemäß der ersten Kennfeldfunktion 60.

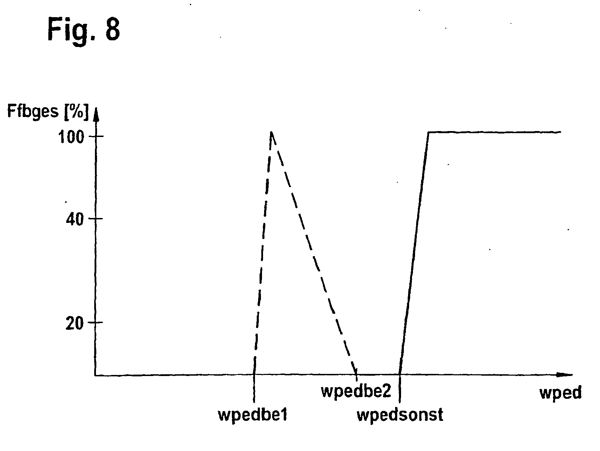

In Figur 8 ist daher das resultierende haptische Signal Ffbges in Prozent der möglichen Rückstellkraft über der Stellung wped des Fahrpedals aufgetragen. Dabei ergibt sich zwischen einer ersten Fahrpedalstellung wpedbe1 und einer zweiten Fahrpedalstellung wpedbe2 ein sägezahnförmiger Verlauf des resultierenden haptischen Signals Ffbges zur haptischen Signalisierung eines vorgegebenen Streckenverbrauchs. Das Abflachen des sägezahnförmigen Verlaufs kann beispielsweise mit einer solch moderaten Steilheit geschehen, dass dies vom Fahrer möglichst unbemerkt bleibt. Bei einer weiteren dritten Fahrpedalstellung wpedsonst, die größer als die erste Fahrpedalstellung wpedbe1 und größer als die zweite Fahrpedalstellung wpedbe2 ist, steigt das resultierende haptische Signal Ffbges ausgehend von Null wieder auf 100% an und verbleibt für Fahrpedalstellungen größer der dritten Fahrpedalstellung wpedsonst auf 100%, um bei der dritten Fahrpedalstellung wpedsonst den optimalen Motorwirkungsgrad zu signalisieren.

Somit lassen sich über die haptische Signalisierung vom Fahrpedal 1 und somit an einem einzigen Bedienelement mehrere verschiedenartige für den Betrieb des Kraftfahrzeugs relevante Informationen wiedergeben und vom Fahrer wahrnehmen.

Das erfindungsgemäße Verfahren und die erfindungsgemäße Vorrichtung zeigen somit eine Lösung, wie mehrere haptische Signale über ein einziges Fahrpedal 1 übermittelt werden können. Der sägezahnförmige Verlauf der Rückstellkraft, der in diesem Beispiel für die Signalisierung des Streckenverbrauchs verwendet wird, hat den Vorteil, dass der maximale Betrag der Rückstellkraft verwendet werden kann. Dies ermöglicht für den Fahrer eine klare Unterscheidung von verschiedenen, für den Betrieb des Kraftfahrzeugs relevanten Informationen, die bei verschiedenen Stellungen des Fahrpedals 1 jeweils mit maximaler Rückstellkraft wiedergegeben werden.

Dabei werden die verschiedenen Informationen durch eindeutige haptische Signalisierungen bei verschiedenen Stellungen des Fahrpedals 1 wiedergegeben. Die Eindeutigkeit wird dabei in diesem Beispiel dadurch erreicht, dass die verschiedenen haptischen Signalisierungen jeweils ein Maximum aufweisen, beispielsweise in Form eines Sägezahns oder Verbleibens auf dem Maximum im Falle der Signalisierung des optimalen Motorwirkungsgrades.

Gegenüber optischen oder akustischen Signalisierungen wird eine haptische Signalisierung als besonders angenehm empfunden und ist darüber hinaus im Bewusstsein des Fahrers ständig präsent.

## Patentansprüche

1. Verfahren zur Signalisierung mehrerer für den Betrieb eines Kraftfahrzeugs mit einer Antriebseinheit relevanten Informationen, wobei verschiedene Informationen durch eindeutige, insbesondere ein Maximum aufweisende, haptische Signalisierungen bei verschiedenen Stellungen eines Bedienelementes (1) des Fahrzeugs, insbesondere einem Fahrpedal, wiedergegeben werden, wobei verschiedene Informationen durch verschiedene Kraftstoffverbrauchswerte gebildet werden, wobei die verschiedenen Kraftstoffverbrauchswerte jeweils durch einen ein Maximum bei der zugeordneten Stellung des Bedienelementes aufweisenden Verlauf der haptischen Signalisierung am Bedienelement (1), insbesondere einen sägezahnförmigen Verlauf, wiedergegeben werden, **dadurch gekennzeichnet, dass** aus einem resultierenden Sollwert für eine Ausgangsgröße der Antriebseinheit und einer aktuellen Motordrehzahl mittels einer Kennlinienfunktion (100) ein zugehöriger spezifischer Kraftstoffverbrauch ermittelt wird, dass der spezifische Kraftstoffverbrauch in einen Streckenverbrauch umgerechnet wird und dass die haptische Signalisierung in Abhängigkeit des ermittelten Streckenverbrauchs mittels einer weiteren Kennlinienfunktion (105) ermittelt wird.

2. Verfahren nach Anspruch 1, **dadurch gekennzeichnet, dass** mindestens ein zu signalisierender Kraftstoffverbrauchswert mittels einer Eingabeeinheit (15) vorgegeben wird.

3. Verfahren nach einem der vorherigen Ansprüche, **dadurch gekennzeichnet, dass** die haptische Signalisierung durch eine am Bedienelement (1) wirkende Rückstellkraft gebildet wird.

4. Vorrichtung (5) zur Signalisierung mehrerer für den Betrieb eines Kraftfahrzeugs mit einer Antriebseinheit relevanten Informationen, wobei Mittel zur Wiedergabe verschiedener Informationen durch eindeutige, insbesondere ein Maximum aufweisende, haptische Signalisierungen bei verschiedenen Stellungen eines Bedienelementes (1) des Fahrzeugs, insbesondere einem Fahrpedal, vorgesehen sind, wobei verschiedene Informationen durch verschiedene Kraftstoffverbrauchswerte gebildet werden, wobei die verschiedenen Kraftstoffverbrauchswerte jeweils durch einen ein Maximum bei der zugeordneten Stellung des Bedienelementes aufweisenden Verlauf der haptischen Signalisierung am Bedienelement (1), insbesondere einen sägezahnförmigen Verlauf, wiedergegeben werden, **dadurch gekennzeichnet, dass** eine Kennlinienfunktion (100) vorgesehen ist, die aus einem resultierenden Sollwert für eine Ausgangsgröße der Antriebseinheit und einer aktuellen Motordrehzahl einen zugehörigen spezifischen Kraftstoffverbrauch ermittelt, dass Umrechnungsmittel (80, 85, 90, 95) vorgesehen sind, die den spezifischen Kraftstoffverbrauch in einen Streckenverbrauch umrechnen, und dass eine weitere Kennlinienfunktion (105) vorgesehen ist, die die haptische Signalisierung in Abhängigkeit des Streckenverbrauchs ermittelt.

## Claims

1. Method for signalling a plurality of information items which are relevant to the operation of a motor vehicle having a drive unit, wherein various information items are passed on by means of signalling operations, which are uniquely defined, in particular have a maximum value, and are haptic, at various positions of an operator control element (1) of the vehicle, in particular an accelerator pedal, wherein various information items are formed by various fuel consumption values, wherein the various fuel consumption values are each passed on by a profile of the haptic signalling operation at the operator control element (1), in particular a sawtooth-shaped profile, having a maximum value at the assigned position of the operator control element, **characterized in that** an associated, specific fuel consumption is determined from a resulting set point value for an output variable of the drive unit and a current engine speed by means of a characteristic curve function (100), **in that** the specific fuel consumption is converted into a consumption per unit travelled, and **in that** the haptic signalling operation is determined as a function of the determined consumption per unit travelled by means of a further characteristic curve function (105).

2. Method according to Claim 1, **characterized in that** at least one fuel consumption value to be signalled is predefined by means of an input unit (15).

3. Method according to one of the preceding claims, **characterized in that** the haptic signalling is formed by means of a restoring force which acts on the operator control element (1).

4. Device (5) for signalling a plurality of information items which are relevant to the operation of a motor vehicle having a drive unit, wherein various information items are passed on by means of signalling operations, which are uniquely defined, in particular have a maximum value, and are haptic, at various positions of an operator control element (1) of the vehicle, in particular an accelerator pedal, wherein various information items are formed by various fuel consumption values, wherein the various fuel consumption values are each passed on by a profile of the haptic signalling operation at the operator control element (1), in particular a sawtooth-shaped profile, having a maximum value at the assigned position of the operator control element, **characterized in that** a characteristic curve function (100) is provided which determines an associated specific fuel consumption from a resulting set point value for an output variable of the drive unit and a current engine speed, **in that** conversion means (80, 85, 90, 95) are provided which convert the specific fuel consumption into a consumption per unit travelled, and **in that** a further characteristic curve function (105) is provided which determines the haptic signalling operation as a function of the consumption per unit travelled.

## Revendications

1. Procédé pour signaler plusieurs informations concernant le fonctionnement d'un véhicule automobile équipé d'une unité motrice selon lequel
on reproduit différentes informations par une signalisation univoque, haptique, ayant notamment un maximum pour différentes positions d'un élément de commande (1) du véhicule, notamment de la pédale d'accélérateur,
selon lequel
on forme différentes informations par différentes valeurs de consommation de carburant,
on reproduit les différentes valeurs de consommation de carburant chaque fois par une évolution de la signalisation haptique sur l'élément de commande (1) par un maximum associé à la position de l'élément de commande, notamment une évolution en forme de dents de scie,
**caractérisé en ce qu'**
à partir de la valeur de consigne résultante pour une grandeur de sortie de l'unité motrice et d'un régime actuel du moteur, par une fonction de courbe caractéristique (100) on détermine une consommation spécifique correspondante de carburant,
on convertit la consommation spécifique de carburant en une consommation rapportée au trajet et
on détermine la signalisation haptique en fonction de la consommation par trajet, obtenue, à l'aide d'une autre fonction de lignes caractéristiques (105).

2. Procédé selon la revendication 1,
**caractérisé en ce qu'**
on prédéfinit au moins une valeur de consommation à signaler par une unité d'entrée (15).

3. Procédé selon l'une des revendications précédentes,
**caractérisé en ce que**
la signalisation haptique est réalisée par la force de rappel agissant sur l'élément de commande (1).

4. Dispositif (5) pour signaler plusieurs informations concernant le fonctionnement d'un véhicule automobile équipé d'une unité motrice, comportant des moyens pour reproduire différentes informations par une signalisation haptique univoque, notamment ayant un maximum pour différentes positions d'un élément de commande (1) du véhicule, notamment la pédale d'accélérateur,
différentes informations étant formées par différentes valeurs de consommation de carburant,
les différentes valeurs de consommation de carburant étant reproduites par une courbe de la signalisation haptique sur l'élément de commande (1), notamment une courbe en forme de dents de scie, cette courbe ayant un maximum associé à la position de l'élément de commande,
**caractérisé par**
une fonction de lignes caractéristiques (100) qui, à partir d'une valeur de consigne résultante pour une grandeur de sortie de l'unité motrice et d'un régime actuel du moteur, détermine une consommation spécifique correspondante de carburant,
des moyens de conversion (80, 85, 90, 95) étant prévus pour convertir la consommation spécifique de carburant en une consommation rapportée à un trajet et
une autre fonction de lignes caractéristiques (105) est prévue pour déterminer la signalisation haptique en fonction de la consommation par trajet.
